Europäisches Patentamt

European Patent Office

Office européen des brevets

(19)

(11) EP 0 629 677 B1

(12) **FASCICULE DE BREVET EUROPEEN**

(45) Date de publication et mention
de la délivrance du brevet:
**08.04.1998 Bulletin 1998/15**

(51) Int Cl.$^6$: **C09K 21/02**, C09K 21/14,
C08K 3/34

(21) Numéro de dépôt: **94401316.8**

(22) Date de dépôt: **13.06.1994**

(54) **Compositions ignifugeantes pour résines synthétiques contenant une zéolithe**

Feuerschützende Zusammensetzungen für Kunstharze, die einen Zeolithen enthalten

Fireproofing compositions for synthetic resins comprising a zeolite

(84) Etats contractants désignés:
**AT BE DE DK ES FR GB IT LU NL SE**

(30) Priorité: **18.06.1993 FR 9307387**

(43) Date de publication de la demande:
**21.12.1994 Bulletin 1994/51**

(73) Titulaire: **ELF ATOCHEM S.A.**
**92800 Puteaux (FR)**

(72) Inventeurs:
 • **Bourgigot, Serge**
  **F-59000 Lille (FR)**
 • **Breant, Patrice**
  **F-27470 Serquigny (FR)**
 • **Delobel, René**
  **F-59650 Villeneuve d'Ascq (FR)**

 • **Lebras, Michel**
  **F-59152 Chereng (FR)**

(56) Documents cités:
 EP-A- 0 132 936      DE-A- 3 728 397
 US-A- 3 428 595

 • PATENT ABSTRACTS OF JAPAN vol. 14, no. 270
  (C-027) 12 Juin 1990 & JP-A-02 080 450
  (WATANABE TOICHI) 20 Mars 1990
 • PATENT ABSTRACTS OF JAPAN vol. 17, no. 63
  (C-1024) 08 Février 1993 & JP-A-04 268 354
  (WATANABE TOICHI) 24 Septembre 1992
 • DATABASE WPI Week 9132, Derwent
  Publications Ltd., London, GB; AN 91-234963 &
  JP-A-3 153 747 (SANKYO) 1 Juillet 1991
 • PATENT ABSTRACTS OF JAPAN vol. 10, no. 43
  (C-329) 20 Février 1986 & JP-A-60 192 742
  (IMAHAMA TOSHINOBU) 1 Octobre 1985

## Description

La présente invention a pour objet une composition utilisable, notamment, pour l'ignifugation des matières organiques comprenant au moins un système intumescent et au moins une zéolithe.

Pour de nombreuses applications, il est indispensable de disposer de matières organiques telles que les résines synthétiques ayant un comportement au feu amélioré.

En effet, les résines synthétiques présentent souvent une faible résistance au feu.

Lors d'un incendie, elles posent de nombreux problèmes dûs notamment au dégagement de gaz corrosifs et toxiques et à la formation de fumées parfois très opaques.

Aussi un des objectifs de la présente invention est d'arriver à ce que ces résines synthétiques propagent aussi lentement que possible voir pas du tout la flamme accidentelle.

A cette fin diverses solutions ont déjà été proposées pour réduire le plus possible la propagation de cette flamme.

On préconise d'ajouter aux résines synthétiques des composés dénommés retardateurs de combustion (ou ignifugeants) qui sont généralement des composés organiques chlorés ou bromés tels que les paraffines chlorées, les polybromodiphényléthers.

Ces retardateurs de combustion peuvent être associés avec des retardateurs de combustion auxiliaires tels que l'oxyde d'antimoine ($Sb_2O_3$) afin d'obtenir un niveau d'efficacité suffisant.

Ces divers additifs peuvent être utilisés en des proportions qui peuvent aller de quelques pour cent à plusieurs dizaines de pour cent en poids par rapport à la résine synthétique à ignifuger.

Toutefois l'utilisation de ces additifs halogénés en quantités importantes occasionne un certain nombre d'inconvénients notamment au moment de la mise en oeuvre (compoundage et moulage) desdites résines synthétiques ignifugées.

Ces résines synthétiques sont en effet soumises à des températures et des contraintes mécaniques de plus en plus drastiques qui sont susceptibles de provoquer un début de décomposition. Ce début de décomposition est de nature à abaisser de façon notoire les propriétés mécaniques et la tenue au feu des résines synthétiques ignifugées.

En outre les produits de décompositions peuvent entraîner la détérioration par corrosion des parties métalliques des outillages de mise en oeuvre.

Pour tenter de remédier à ces effets indésirables de nombreux composés et systèmes ne contenant pas d'halogène ont été proposés.

Ainsi, il est connu d'incorporer aux résines synthétiques des systèmes qui se caractérisent par le fait qu'au moment de la combustion les composés desdits système interagissent pour former une mousse carbonée, plus ou moins alvéolaire, incombustible qui ralentit la libération des gaz inflammables provenant de la résine synthétique en décomposition.

De tels systèmes, que nous désignerons par la suite par systèmes intumescents sont constituées généralement de trois constituants principaux :

- un agent de gonflement dénommé spumogène, qui produit des gaz ou des vapeurs ininflammables tels que l'azote, l'ammoniac qui aident à la formation de la mousse carbonée. Le spumogène est généralement un composé azoté tel que l'urée, la mélamine, les sels d'amine.
- un agent de carbonisation qui contribue à la formation de la mousse carbonée ("chars"). C'est généralement un composé polyhydroxylé tel que sucres, triméthylolpropane, mono ou polypentacrythritol ;
- un agent deshydratant qui est généralement un composé générateur d'acide au moment de la combustion. Les agents deshydratants les plus couramment employés sont les polyphosphates d'ammonium, les phosphates de mélamine, les sulfates de mélamine.

C'est ainsi que G. Camino et al. (Polym. Degrad. 7 25-31, 1984 et 12, 203, 185) proposent l'utilisation d'un système intumescent constitué d'un mélange de polyphosphate d'ammonium et de pentaérythritol.

Cependant un tel mélange est peu satisfaisant même en des teneurs élevées -supérieures à 30 % en poids par rapport à la résine synthétique à ignifuger - lorsqu'on cherche à l'appliquer notamment à l'ignifugation des polymères de l'éthylène.

Ainsi, par exemple, l'utilisation de 30 % en poids d'un tel système dans un polymère d'éthylène de faible indice de fluidité entraîne une augmentation de l'indice d'oxygène de 6 % seulement ce qui est très insuffisant pour de nombreuses applications.

Y. Halpern et al [Brevets US 4 478 998 et US 4 154 930] ont proposé d'autres moyens pour améliorer le retard de la flamme par intumescence en combinant dans une seule molécule les 3 composés du système intumescent : spumogène, agent de carbonisation, agent deshydratant au lieu des mélanges plus ou moins définis connus précédemment.

Ainsi, ces auteurs ont préparé [Brevet US 4 154 930] à partir de l'oxychlorure de phosphore et du monopentaérythritol, le 3,9-bis(chloro)-2, 4, 8, 10-tétraoxa-2, 9-diphosphaspiro [5.5] undécane-3, 9-dioxyde. Ce produit est ensuite hydrolysé puis soumis à réaction avec la mélamine pour former le sel de dimélamine du spiro acide, lequel permet de porter l'indice d'oxygène du polypropylène de 17,5 % à 27 % lorsqu'il est mélangé à ce dernier à raison de 20 % en poids.

Cette synthèse présente l'inconvénient de nécessiter de nombreuses étapes de purification des différents produits intermédiaires et, en raison du caractère très exothermique de la réaction de $P(0)Cl_3$ sur le monopentaérythrytol, d'exiger des précautions opératoires accrues.

De plus, le produit obtenu doit être généralement associé avec un polyol tel que le monopentaérytrhytol afin d'obtenir un niveau d'efficacité satisfaisant, notamment pour améliorer le comportement au feu des polymères d'éthylène et/ou de propylène (Brevet US 4,253,972).

Il a maintenant été trouvé une composition ignifugeante sans halogène, caractérisée en ce qu'elle comprend :

**A.** au moins un système intumescent lequel contient, au moins un spumogène, au moins un agent de carbonisation et au moins un agent deshydratant et,
**B.** au moins une zéolithe.

Selon la présente invention on entend par zéolithes des aluminosilicates cristallins synthétiques ou naturels constitués de tétraèdres $AlO_4$ et $SiO_4$ reliés entre eux par les sommets oxygène. L'assemblage de tétraèdres dans l'espace forme des polyèdres qui délimitent un réseau de canaux, cages, cavités dans lesquels se placent des cations en des points où ils équilibrent les charges négatives portées par les tétraèdres $AlO_4$.

La formule structurelle basée sur la plus petite cellule unitaire est représentée par :

$$Mx/_n \, [(AlO_2)_x, (SiO_2)_y] \, w \, H_2O \qquad\qquad (I)$$

dans laquelle :

- **M** représente un cation d'un métal alcalin tel que Li, Na, K et/ou un cation d'un métal alcalino-terreux tel que Ba, Ca, Mg ; $NH_4^+$ ; $H^+$ et/ou un cation tétraalkylammonium,

- **W** est un nombre entier qui représente le nombre de molécules d'eau par cellule unitaire,

- **x** et **y** sont des nombres entiers qui représentent le nombre total de tétraédres par cellule unitaire et le rapport y/x est un nombre $\geq 1$.

- **n** représente la valence du ou des cations.

M peut également représenter un cation métallique tel que le cuivre.

La présente invention concerne également des composés à structure zéolithique tels que les aluminophosphates ($AlPO_4$), les silicoaluminophosphates (SAPO) et les boroaluminosilicates.

Les zéolithes (I) utilisées dans la présente invention sont choisies de préférence parmi :

- <u>Les zéolithes du type A de formule</u> (Ia)

$$M \, x/_n \, [(AlO_2)_{12} \, (SiO_2)_{12}] \, 27H_2O$$

dans laquelle y/x est égal à 1

- <u>Les zéolithes du type X de formule</u> (Ib)

$$M \, x/_n \, [(AlO_2)_{86}(SiO_2)_{106}] \, 264H_2O$$

dans laquelle y/x est égal à 1,23

- <u>Les zéolithes du type Y de formule</u> (Ic)

$$M \, x/_n \, [(AlO_2)_{56}(SiO_2)_{136}] \, 250H_2O$$

dans laquelle y/x est égal à 2,43

- _Les zéolithes du type L de formule_ (Id)

$$M \, x/_n \, [(AlO_2)_9(SiO_2)_{27}] \, 22H_2O$$

dans laquelle y/x est égal à 3

- _Les zéolithes du type ZSM de formule_ (Ie)

$$M \, x/_n \, [(AlO_2)_3(SiO_2)_{93}] \, 16H_2O$$

dans laquelle y/x est égal à 31

- _Les zéolithes ZM_ de type mordénite ayant une faible teneur en sodium et un rapport y/x allant de 10 à environ 100,

- Les zéolithes naturelles tels que

  la chabazite $Ca_2 \, [(AlO_2)_4 \, (SiO_2)_8]$, $13H_2O$,
  la mordenite $Na_8 \, [(AlO_2)_8 \, (SiO2)_{40}]$, $24H_2O$,
  la faujasite $(Ca, Mg, Na_2, K_2)29,5 \, [(AlO_2)_{59} \, (SiO_2)_{133]}235H_2O$,

et les mélanges d'au moins deux des zéolithes précitées.

Parmi les zéolithes du type A on préfère celles dans la formule desquelles: $M \, x/_n$ représente $K_9 \, Na_3$ : zéolithe 3A ; $Ca_{4,5} \, Na_3$ : zéolithe 5A et plus particulièrement $Na_{12}$ : zéolithe 4A.

Parmi les zéolithes du type X on préfère celles dans la formule desquelles: $M \, x/_n$ représente $Ca_{21,5} \, Na_{43}$ : zéolithe 10 X et $Na_{86}$ : zéolithe 13 X

Parmi les zéolithes du type Y on préfère celle de formule :

$$Na_{56} \, [(AlO_2)_{56} \, (SiO_2)_{136}]250 \, H_2O :$$

Parmi les zéolithes du type ZSM on préfère celle de formule $(Na, \, tétrapropylammonium)_3 \, [(AlO_2)_3 \, (SiO_2)_{93}] \, 16 \, H_2O$ : zéolithe ZSM 5.

Parmi les zéolithes du type ZM on préfère la zéolithe ZM510.

Parmi les zéolithes naturelles on préfère la mordénite.

Les zéolithes employées selon l'invention sont généralement utilisées sous forme de poudre ayant un diamètre au moins égale à 1 µm et de préférence compris entre 2 et 50 µm.

Les zéolithes selon la présente invention sont généralement utilisées sous forme hydratée.

La composition ignifuge selon la présente invention est réalisée avantageusement par mélange mécanique à sec dans un mélangeur type TURBULA ou équivalent de la (ou des) zéolithe(s) avec les constituants du système intumescent qui se trouvent généralement sous forme de poudres ayant été préalablement broyées et tamisées de façon à obtenir des poudres ayant un diamètre au plus égal à 200 microns.

Le mélangeage se fait généralement à température ambiante et pendant une durée suffisante permettant d'obtenir un mélange dans lequel les différents composants soient dispersés d'une façon homogène.

On peut également préparer séparement le système intumescent en mélangeant mécaniquement les divers constituants.

Ce mélange peut s'effectuer à sec ou bien encore dans un solvant. Cette dernière façon d'opérer peut présenter un intérêt lorsqu'un des constituants se présente sous forme non poudreuse. Il y a lieu dans ce cas d'éliminer soigneusement le solvant avant d'effectuer le mélange avec la zéolithe.

Les zéolithes selon l'invention sont utilisées avantageusement entre 0,25 % et 10 % en poids par rapport à la composition ignifugeante et de préférence entre 1 % et 5 %.

Selon la présente invention le système intumescent contient au moins un spumogène, au moins un agent de carbonisation et au moins un agent deshydratant.

Le système intumescent est utilisé avantageusement entre 99,75 % et 90 % en poids par rapport à la composition ignifugeante et de préférence entre 99 % et 95 %.

Les spumogènes employés dans le système intumescent de la présente invention sont généralement des composés azotés susceptibles de former lors de la combustion des gaz ininflammables tels l'azote et l'ammoniac.

A titre d'illustration de tels composés on citera la mélamine, le mélam, le melem, l'amméline, l'ammélide, l'urée, les guanamines, la cyanamide, l'amino-3 triazole-1,2,4, l'amino-4 triazole-1,2,4, le guanazole, l'urazole, le benzimidazole, l'éthylène dimélamine, le diéthylénétrimélamine, la pipérazine.

Parmi tous ces composés, on préfère la mélamine et ses dérivés tels que les guanamines.

S'agissant des agents de carbonisation, on utilisera un ou plusieurs composés polyhydroxylés.

A titre d'illustration de tels composés on citera les sucres tels que le glucose, le maltose et l'arabinose, les alcools polyhydroxylés tels que l'arabitol, l'érythritol, le sorbitol, l'inositol, le triméthylolpropane, le glycérol, le mono-, di-, et tripentaérylthritol, l'éthylène glycol, le propylène glycol, les amidons de formule $(C_6 H_{10} O_5)_n$, le polyéthylène glycol et les polymères polyhydroxylés tels que les copolymères éthylène/alcool vinylique.

Parmi tous ces composés on préfère tout particulièrement le monopentaérythrytol.

S'agissant des agents deshydratants ou plus précisément des composés susceptibles de former au moment de la combustion des acides, on préférera tout particulièrement ceux qui conduisent à des acides contenant du phosphore tels que $H_3PO_4$, $H_3PO_3$, $H_4P_2O_7$. Ces composés générateurs d'acides contenant du phosphore se trouvent généralement sous forme de sels d'amines ou d'esters.

A titre d'illustration de tels composés, on citera les phosphates, pyrophosphates et polyphosphates d'ammonium, les phosphates de mélamine, le phosphite de mélamine, le phosphite et le disphosphite de pirérazine, le phosphite de guanazole, le pyrophosphate de mélamine, le pyrophosphate de piperazine, des esters phosphoriques tels que le triéthylphosphate, des esters phosphoniques tels que l'éthylphosphonate de diéthyle.

Parmi ces composés on préfère tout particulièrement les polyphosphates d'ammonium répondant à la formule générale $(NH_4)_{n+2} P_n O_{3n+1}$ dans laquelle n représente un nombre entier $\geq 2$.

Selon la présente invention on utilisera de préférence dans la composition ignifugeante le système intumescent sous forme d'un mélange d'un des constituants avec les deux autres se trouvant sous forme d'un seul composé.

Ainsi on utilisera de préférence le spumogène et l'agent deshydratant sous forme d'un seul composé tel que notamment les sels d'amines et les sels ammonium.

A titre d'exemple de sels d'amine préférés on citera tout particulièrement les polyphosphates d'ammonium.

Selon un mode préféré de l'invention on utilisera les polyphosphates d'ammonium avec le mono, di ou tripentaérythrytol.

Tout particulièrement on utilisera le polyphosphate d'ammonium avec le monopentaérythrytol.

Les proportions relatives des constituants dans le système intumescent peuvent varier dans une large mesure.

Ainsi le rapport pondéral $R = \dfrac{\text{Spumogène/Agent deshydratant}}{\text{agent de carbonisation}}$ peut être compris entre 1 et 7 et de préférence entre 2 et 4.

La présente invention concerne également l'application des compositions contenant le système intumescent et la zéolithe à l'ignifugation des matières organiques.

Avantageusement ces compositions sont utilisées pour ignifuger les résines synthétiques.

A titre d'illustration de résines synthétiques qui peuvent être ignifugées par les compositions selon la présente invention on citera :

- les polymères ou copolymères de l'éthylène comme par exemple le polyéthylène haute densité (densité égale à 0,96 - 0,97), le polyéthylène basse densité radicalaire (d = 0,92 à 0,93 environ) et les copolymères d'éthylène et d'au moins une $\alpha$-oléfine possédant de 3 à 8 atomes de carbone ayant une densité de 0,89 à 0,95 environ,

- les homopolymères du propylène et les copolymères d'éthylène et de propylène ayant une proportion molaire d'éthylène comprise entre 0,5 % et 30 %.

- les copolymères d'éthylène et d'au moins un ester vinylique d'acide carboxylique saturé ayant 2 à 6 atomes de carbone tel que l'acétate de vinyle ou le proponate de vinyle,

- les copolymères éthylène/ester d'acide insaturé, ledit acide présentant de préférence une insaturation éthylénique adjacente au groupe carboxylique. L'acide insaturé est de préférence un mono-acide tel que l'acide acrylique, l'acide méthacrylique, l'acide crotonique ou l'acide cinnamique. Il peut également s'agir d'un diacide tel que l'acide maléique, l'acide fumarique, l'acide citraconique, l'acide glutaconique ou l'acide muconique. Dans le cas des diacides, l'ester d'acide insaturé peut être un mono-ester ou, de préférence, un diester. L'alcool duquel dérive l'ester d'acide insaturé comprend de préférence de 1 à 8 atomes de carbone. Le groupe estérifiant peut être linéaire ou ramifié, tel que par exemple méthyle, éthyle, n-propyle, isopropyle, n-butyle, isobutyle, tertiobutyle, isoamyle, n-hexyle, 2-éthylhexyle ou isooctyle.

De tels copolymères peuvent, outre les motifs dérivés de l'éthylène et ceux dérivés de l'ester d'acide insaturé, comprendre des motifs dérivés

- d'un anhydride d'acide dicarboxylique insaturé, ceux-ci pouvant être présents en une proportion allant jusqu'à 5 % environ en poids dans le copolymère. L'anhydride présent peut être choisi parmi l'anhydride citraconique, l'anhydride itaconique, l'anhydride tétrahydrophtalique et, de préférence, l'anhydride maléique ;

- d'un monomère glycidylique insaturé, ceux-ci pouvant être présents en une proportion allant jusqu'à 18 % environ en poids dans le copolymère. Le monomère glycidylique peut être choisi notamment parmi les méthacrylates et acrylates de glycidyle, les itaconates de mono- et diglycidyle, butènetricarboxylate de mono-, di- et triglycidyle,

- les ionomères tels que les copolymères éthylène/acide acrylique ou méthacrylique totalement ou partiellement salifiés par Ca, Mg ou Zn.

- les polymères de composés vinylaromatiques tels que le styrène, les styrènes alpha-substitués tels que l'alpha-méthylstyrène, les styrènes substitués sur le noyau aromatique, tels que l'orthochlorostyrène, le paraméthylstyrène, les copolymères des composés vinylaromatiques précités avec des comonomères tels que l'acide acrylique, l'acide méthacrylique, leurs esters méthylique ou éthylique, l'acrylonitrile, les polymères précédents greffés sur le polybutadiène ou le polyisoprène.

A titre d'illustration de résines styréniques on citera le polystyrène, le polystyrène greffé polybutadiène dénommé polystyrène choc, les résines acrylonitrile-butadiène-styrène (résines ABS), les résines acrylonitrile-styrène (résines AS), les résines esters alkylméthacrylique-butadiène-styrène (résine MBS).

- les polyamides résultant de la polycondansation d'un ou plusieurs aminoacides tels que les acides aminocaproïques, amino-7 heptanoïque, amino-11 undécanoïque, d'un ou plusieurs lactames, tels que le caprolactame, le lauryllactame, d'un ou plusieurs sels ou mélanges de diamines telles l'hexaméthylène diamine, la dodécaméthylènediamine avec des diacides tels que les acides téréphtalique, adipique, azélaïque ou des mélanges des mélanges de tous ces monomères, ce qui conduit à des copolyamides.

- les polyétheresteramides.

- les copolymères éthylène-alcool vinylique (EVOH) provenant de l'alcoolyse partielle ou totale de copolymères éthylène-ester vinylique et contenant de 3 à 75 % moles d'éthylène,

- les polyesters tels que le PET et le PBT,

- les polyuréthanes, les polyméthacrylates de méthyle (PMMA), les polycarbonates, les époxydes, les polysulfones et les mélanges d'au moins deux des résines précitées.

La quantité de la composition -système intumescent/zéolithe selon la présente invention, défini comme le taux de charges est fonction du degré d'ignifugation désiré.

Il peut être compris entre 5 % et 60 % en poids par rapport à la résine ignifugée.

D'une façon générale on obtient un comportement au feu amélioré et une bonne conservation des propriétés mécaniques avec un taux de charges compris entre 15 % et 35 %.

Les compositions ignifugeantes selon la présente invention peuvent également être incorporées dans des peintures, mastics, enduits, qui nécessitent une protection au feu élevée.

Ainsi il peut être notamment intéressant d'utiliser de telles compositions pour les revêtements intérieurs de portes coupe-feu qui, lors d'un incendie, se gonfleront en mousse carbonée et exerceront ainsi un effet d'isolation.

Ces compositions peuvent également être utilisées dans les formulations de revêtement de cables électriques.

L'incorporation de la composition selon l'invention aux matières organiques et notamment aux résines synthétiques s'effectue généralement par malaxage des composés de la composition finement divisés dans la résine synthétique fondue.

Tout appareil assurant une bonne dispersion peut donc convenir. Conviennent particulièrement bien à cet effet les malaxeurs type BUSS® ou WERNER et PFLEIDER®.

Les conditions de malaxage doivent être appropriées pour obtenir une bonne dispersion des composés de la composition dans la résine synthétique fondue, cette démarche relevant de la compétence de l'homme du métier.

Le compound obtenu est généralement granulé.

Les granulés peuvent être moulés par injection ou par compression à des températures convenables en éprouvettes normalisées pour mesurer l'indice d'oxygène, pour pratiquer l'essai de réaction au feu UL 94 et pour déterminer certaines propriétés mécaniques tels que l'allongement à la rupture et la résistance à la rupture.

Une manière simple d'opérer consiste à mélanger à sec les granulés de polymère et les composés de la composition qui peuvent être sous forme de poudre dans un mélangeur type TURBULA® ou, plus simplement, au tonneau et à alimenter avec ce mélange un malaxeur approprié.

On peut également préparer des mélanges maîtres résine synthétique à ignifuger -composition contenant le système intumescent et la zéolithe.

Avec ce compound qui peut se présenter sous forme de granulés on peut réaliser comme précédemment dans un mélangeur type TURBULA un mélange avec la résine à ignifuger puis alimenter un malaxeur.

En plus de la composition selon l'invention on peut incorporer d'autres additifs tels que pigments colorants, stabilisants vis à vis des rayons ultraviolets, agents de démoulage, stabilisants à la dégradation thermique et charges. On peut également incorporer des fibres de verre dans le but d'améliorer la rigidité de la résine synthétique.

Il est surprenant de constater que les zéolithes contenues dans la composition selon la présente invention confèrent à la mousse carbonée qui se développe à partir d'environ 300°C une souplesse très supérieure à celle obtenue à partir de composition sans zéolithe.

Sans que la demanderesse ne soit liée par une explication il y a lieu de penser que cette "souplesse" confère à la mousse carbonée une meilleure accomodation aux contraintes provoquées par la flamme.

Ceci entraîne vraisemblablement un "retard" à la formation et à la propagation des fissures ce qui entraîne une stabilité améliorée de la mousse carbonée assurant une meilleur protection de la résine ignifugée au moyen de la composition selon la présente invention.

D'autres avantages apportés par la présence des zéolithes dans les compositions ignifugeantes selon la présente invention sont de limiter la quantité de CO et de fumées dégagés au moment de la combustion ainsi que de diminuer l'opacité desdites fumées.

Les exemples suivants explicitent l'invention.

Les formulations ont été préparées en utilisant les constituants suivants :

- un terpolymère éthylène/acrylate de butyle/anhydride maléique (P1) contenant 91,5 % en poids d'unités dérivées de l'éthylène, 5 % en poids d'unités dérivées de l'acrylate de butyle et 3,5 % en poids d'unités dérivées de l'anhydride maléique et présentant un indice de fluidité (mesuré selon la norme NF T 51016 à 190°C sous une charge de 2,16 kg) égal à 5 g/10 mn, un point de fusion égal à 107°C et indice d'oxygène (IO) égal à 19 %

- un terpolymère éthylène/acrylate de butyle/anhydride maléique (P2) contenant 92,2 % en poids d'unités dérivées de l'éthylène, 5 % en poids d'unités dérivées de l'acrylate de butyle et 2,8 % en poids d'unités dérivées de l'anhydride maléique et présentant un indice de fluidité (IF) égal à 1 g/10 mn et un IO égal à 19 %.

- un copolymère éthylène/acrylate de méthyle (P3) contenant 85 % en poids d'unités dérivées de l'éthylène et 15 % en poids d'unités dérivées de l'acrylate de méthyle, présentant un IF égal à 0,3 g/mn et un IO égal à 18 %.

- un copolymère éthylène/acrylate de méthyle (P4) contenant 78 % en poids d'unités dérivées de l'éthylène et 22 % en poids d'unités dérivées de l'acrylate de méthyle, présentant un IF égal à 0,5/10 mn et un IO égal à 18 %.

- un copolymère éthylène/acétate de vinyle (P5) ayant une teneur de 5 % en poids d'acétate de vinyle, présentant un IF de 0,3 g/10 mn (mesuré selon la norme NF T 51016 à 190°C sous une charge de 2,16 kg) et un IO égal à 19 %.

- un copolymère éthylène/acétate de vinyle (P6) ayant une teneur de 15 % en poids d'acétate de vinyle, présentant un IF égal à 0,7 g/10 mn et un IO égal à 20 %.

- un copolymère éthylène/acrylate de butyle (P7) contenant 87 % en poids d'unités dérivées de l'éthylène et 13 % en poids d'unités dérivées de l'acrylate de butyle, présentant un IF égal à 4 g/10 mn et un IO égal à 18 %.

- un copolymère éthylène/alcool vinylique (P8) contenant 44 % en moles d'unités dérivées de l'éthylène présentant un IF égal à 5,3 g/10 mn (mesuré selon la norme NFT 51016 à 190°C sous une charge de 2,16 kg) et un IO égal à 22,6 %.

- un polyméthacrylate de méthyle (P9) présentant un IF égal à 15 g/10 mn (mesuré selon la norme ISO R 1133 à

EP 0 629 677 B1

230°C sous une charge de 3,8 kg) et un IO égal à 17,8 %.

- un polyamide 11 (P10) ayant une viscosité de solution égale à 1,01, une densité égale à 1,03 et un IO égal à 26,2 %.

- un polyuréthane thermoplastique (P11) à base polyéther de densité égale à 1,13, présentant une dureté Shore D égal à 47± 3 et un IO égal à 27 %.

- un homopolymère du propylène (P12) présentant un melt index égal à 5 (mesuré selon la norme ISO R 1133 à 230°C sous une charge de 2,16 kg) et un IO égal à 18 %.

- Un système intumescent (S1) constitué de polyphosphate d'ammonium (APP) et de monopentaérythritol (MPE) dans un rapport pondéral $\frac{APP}{MPE} = \frac{3}{1}$.

  - Le polyphosphate d'ammonium utilisé dans S1 est l'EXOLIT 422 commercialisé par la Société Hoechst et à une teneur pondérale en phosphore égale à 29 %.
  - Le monopentaérythritol utilisé dans S1 a une teneur en monopentaérythritol supérieur à 99 % et est vendu par la Société Aldrich.

- Un système intumescent (S2) constitué par un dérivé phosphoré commercialisé par la Société MONSANTO sous la dénomination PHOSCHEK P/30 et contenant 32 % en poids de phosphore et de MPE dans un rapport pondéral composé phosphoré/MPE égal à 3/1.
  Les zéolithes utilisées sont les suivantes :

- les zéolithes du type A -3A, 4A et 5A- et les zéolithes du type X -10X et 13X- sont commercialisées par la Société CECA sous la dénomination SILIPORITE (Siliporite 3A pour la zéolithe 3A etc..) Elles se présentent sous forme de poudre de granulométrie comprise entre 2 et 4 microns.

- la zéolithe du type Y de formule $Na_{56}$ [(AlO$_2$)$_{56}$ (SiO$_2$)$_{136}$]$_{250}$ $H_2O$ commercialisée par la Société VENTRON.

- la zéolite ZM 510 est une zéolithe type mordénite avec une très faible teneur en sodium et un rapport Si/Al égal à 11. Elle est commercialisée par la Société ZEOCAT.

- la zéolithe ZSM 5 est commercialiée par la Société CONTEKA sous la dénomination zéolithe CBV 1502.

- la mordénite

- une zéolithe type aluminophosphate dénommée AlPO$_4$-5 obtenue selon le mode opératoire de l'exemple 1 du brevet US 4 310 440.

On a indiqué dans les tableaux 1, 2 et 3 les quantités en parties en poids de constituants utilisés pour préparer les formulations.
Ces formulations ont été réalisées par mélangeage à sec au tonneau des différents composés de la composition ignifugeante qui se présentent sous forme de poudres avec les divers résines synthétiques P1 à P12 qui se présentent généralement sous forme de granulés.
On alimente ensuite avec le mélange un malaxeur BUSS.
Les joncs qui en sont extrudés sont refroidis et découpés.
Les granulés ainsi obtenus après séchage sont moulés par injection en éprouvette normalisées sur lesquelles on mesure l'incide d'oxygène (OI) exprimé en % selon la norme NF T 51071, on pratique l'essai de réaction au feu UL 94 selon la norme NFT 51072 (épaisseur des éprouvettes = 3,2 mm) et on détermine l'allongement à la rupture (AR) exprimé en % et la résistance à la rupture (RR) exprimée en Mégapascals (MPa) déterminés selon la norme NFT.
Les résultats des mesures sont reportés dans les tableaux 1, 2 et 3.
Les exemples 1, 12, 14, 17, 19, 23, 25, 27, 29, 31 et 33 sont donnés à titre comparatifs.
Les exemples 2 à 11, 13, 15, 16, 18, 20, 21, 22, 24, 26, 28, 30, 32, 34 et 35 sont selon l'invention.

8

| EXEMPLES FORMULATIONS | 1 | 2 | 3 | 4 | 5 | 6 | 7 | 8 | 9 | 10 | 11 |
|---|---|---|---|---|---|---|---|---|---|---|---|
| P1 | 70 | 70 | 70 | 70 | 70 | 70 | 70 | 70 | 70 | 70 | 70 |
| S1 | 30 | 29 | 29 | 29 | 29 | 29 | 29 | 28,5 | 28,5 | 28 | 28 |
| Zéolithe 3A | | 1 | | | | | | | | | |
| Zéolithe 4A | | | 1 | | | | | | | | |
| Zéolithe 5A | | | | 1 | | | | | | | |
| Zéolithe 10X | | | | | 1 | | | | | | |
| Zéolithe 13X | | | | | | 1 | | | | | |
| Zéolithe Y | | | | | | | 1 | | | | |
| Zéolithe ZM 510 | | | | | | | | 1,5 | | | |
| Zéolithe ZSM 5 | | | | | | | | | 1,5 | 2 | |
| Mordenite | | | | | | | | | | | 2 |
| IO (%) | 30 | 38 | 39 | 39 | 37 | 35 | 38 | 33 | 34 | 36 | 37 |
| UL 94 | V2 | | VO | | | | | | | | |
| AR (%) | | | 55 | | | | | | | | |
| RR (MPa) | | | 6,2 | | | | | | | | |

**TABLEAU 1**

EP 0 629 677 B1

| EXEMPLES FORMULATIONS | 12 | 13 | 14 | 15 | 16 | 17 | 18 | 19 | 20 | 21 | 22 |
|---|---|---|---|---|---|---|---|---|---|---|---|
| P2 | 70 | 70 | 70 | 70 | | | | | | | |
| P3 | | | | | 70 | | | | | | |
| P4 | | | | | | 70 | 70 | 80 | 79,5 | | |
| P5 | | | | | | | | | | 70 | |
| P6 | | | | | | | | | | | 70 |
| S1 | 30 | 29 | | | 29 | 30 | 29 | 20 | 20 | 29 | 29 |
| S2 | | | 30 | 29 | | | | | | | |
| Zéolithe 4A | | 1 | | 1 | 1 | | 1 | | 0,5 | 1 | 1 |
| IO (%) | 29 | 33 | 26 | 31 | 29 | 28,2 | 31 | 21 | 26,8 | 33 | 36 |
| UL 94 | V2 | VO | | | | | | | | | |
| AR (%) | | 93 | | | 434 | | 627 | | | 345 | 494 |
| RR (MPa) | | 7 | | | 9,4 | | 8,1 | | | 9,6 | 10,8 |

**TABLEAU 2**

EP 0 629 677 B1

| EXEMPLES FORMULATIONS | 23 | 24 | 25 | 26 | 27 | 28 | 29 | 30 | 31 | 32 | 33 | 34 | 35 |
|---|---|---|---|---|---|---|---|---|---|---|---|---|---|
| P1 | | | | | | | | | | | | | 70 |
| P7 | 70 | 70 | | | | | | | | | | | |
| P8 | | | 70 | 70 | | | | | | | | | |
| P9 | | | | | 70 | 70 | | | | | | | |
| P10 | | | | | | | 70 | 70 | | | | | |
| P11 | | | | | | | | | 70 | 70 | | | |
| P12 | | | | | | | | | | | 70 | 70 | |
| S1 | 30 | 28,5 | 30 | 29 | 30 | 29 | 30 | 29 | 30 | 29 | 30 | 29 | 27 |
| Zéolithe AlPO$_{4-5}$ | | | | | | | | | | | | | 3 |
| Zéolithe 4A | | 1,5 | | 1 | | 1 | | 1 | | 1 | | | |
| Zéolithe 13X | | | | | | | | | | | | 1 | |
| IO (%) | 28 | 33 | 29 | 35 | 30,8 | 44,4 | 31,8 | 38 | 23,4 | 38 | 32 | 45 | 35 |
| UL 94 | | VO | | | | | | | | | VO | VO | |

**TABLEAU 3**

**Revendications**

1.  Composition ignifugeante sans halogène caractérisée en ce qu'elle comprend :

    **A.** au moins un système intumescent lequel contient, au moins un spumogène, au moins un agent de carbonisation et au moins un agent deshydratant et,
    **B.** au moins une zéolithe.

2.  Composition selon la revendication 1, caractérisée en ce que la zéolithe est un aluminosilicate cristallin dont la plus petite cellule unitaire est représentée par la formule :

$$Mx/_n \; [(AlO_2)_x, (SiO_2)_y] \; w \; H_2O \qquad (I)$$

dans laquelle :

*   **M** représente un cation d'un métal alcalin tel que Li, Na, K et/ou un cation d'un métal alcalino-terreux tel que Ba, Ca, Mg ; $NH_4^+$ ; $H^+$ et/ou un cation tétraalkylammonium,

*   **W** est un nombre entier qui représente le nombre de molécules d'eau par cellule unitaire,

*   **x** et **y** sont des nombres entiers qui représentent le nombre total de tétraédres par cellule unitaire et le rapport y/x est un nombre $\geqq 1$.

*   **n** représente la valence du ou des cations.

3.  Composition selon la revendication 2, caractérisée en ce que la zéolithe de formule (I) est choisie parmi :

*   Les zéolithes du type A de formule $\qquad$ (Ia)

$$M \; x/_n \; [(AlO_2)_{12} \; (SiO_2)_{12}] \; 27H_2O$$

    dans laquelle y/x est égal à 1
*   Les zéolithes du type X de formule $\qquad$ (Ib)

$$M \; x/_n \; [(AlO_2)_{86}(SiO_2)_{106}] \; 264H_2O$$

    dans laquelle y/x est égal à 1,23
*   Les zéolithes du type Y de formule $\qquad$ (Ic)

$$M \; x/_n \; [(AlO_2)_{56}(SiO_2)_{136}] \; 250H_2O$$

    dans laquelle y/x est égal à 2,43
*   Les zéolithes du type L de formule $\qquad$ (Id)

$$M \; x/_n \; [(AlO_2)_9(SiO_2)_{27}] \; 22H_2O$$

    dans laquelle y/x est égal à 3
*   Les zéolithes du type ZSM de formule $\qquad$ (Ie)

$$M \; x/_n \; [(AlO_2)_3(SiO_2)_{93}] \; 16H_2O$$

dans laquelle y/x est égal à 31

- Les zéolithes ZM de type mordénite ayant une faible teneur en sodium et un rapport y/x allant de 10 à environ 100,
- Les zéolithes naturelles choisies parmi :

  la chabazite $Ca_2 [(AlO_2)_4 (SiO_2)_8]$, $13H_2O$,
  la mordenite $Na_8 [(AlO_2)_8 (SiO2)_{40}]$, $24H_2O$,
  et la faujasite $(Ca, Mg, Na_2, K_2)29,5 [(AlO_2)_{59} (SiO_2)_{133}]235H_2O$.

4. Composition selon la revendication 3, caractérisée en ce que dans la zéolithe de formule (Ia) $M^{x}/_n$ représente :

$$K_9 Na_3,$$

$$Na_{12},$$

ou

$$Ca_{4,5} Na_3.$$

5. Composition selon la revendication 3, caractérisée en ce que dans les zéolithes de formule (Ib) $M^{x}/_n$ représente :

$$Ca_{21,5} Na_{43} \text{ ou } Na_{86}.$$

6. Composition selon la revendication 3, caractérisée en ce que dans les zéolithes de formule (Ic) $M^{x}/_n$ représente $Na_{56}$

7. Composition selon la revendication 3, caractérisée en ce que dans les zéolithes de formule (Ic) $M^{x}/_n$ représente $(Na, tétrapropylammonium)_3$.

8. Composition selon la revendication 3, caractérisée en ce que dans la zéolithe ZM le rapport $^{y}/_x$ est égal à 11.

9. Composition selon la revendication 3, caractérisée en ce que la zéolithe naturelle est la mordenite.

10. Composition selon la revendication 1, caractérisée en ce la zéolithe est l'aluminophosphate $AlPO_4$-5.

11. Composition selon la revendication 1, caractérisée en ce que l'agent de carbonisation est un composé polyhydroxylé.

12. Composition selon la revendication 11, caractérisée en ce que le composé polyhydroxylé est le monopentaérythritol.

13. Composition selon la revendication 1, caractérisée en ce que le spumogène est un composé azoté.

14. Composition selon la revendication 13, caractérisée en ce que le composé azoté est choisi parmi la mélamine, l'urée le guanazole et la pipérazine.

15. Composition selon la revendication 1, caractérisée en ce que l'agent deshydratant est un composé générateur d'acide contenant du phosphore.

16. Composition selon la revendication 15, caractérisée en ce que le composé générateur d'acide est un sel d'amine ou un ester phosphorique.

17. Composition selon la revendication 16, caractérisée en ce que le sel d'amine est choisi parmi les phosphates d'ammonium, les polyphosphates d'ammonium et les phosphates de mélamine.

**18.** Composition selon la revendication 1, caractérisée en ce que le spumogène et l'agent deshydratant forment un seul composé.

**19.** Composition selon la revendication 18, caractérisée en ce que le composé est un sel d'ammonium.

**20.** Composition selon la revendication 18 ou 19, caractérisée en ce que le composé est un polyphosphate d'ammonium de formule

$$(NH_4)_{n+2} P_n O_{3n+1}$$

dans laquelle n est un nombre entier $\geq$ 2.

**21.** Composition selon la revendication 1, caractérisée en ce que le rapport pondéral

$$\frac{\text{Spumogène/Agent deshydratant}}{\text{agent de carbonisation}}$$

est compris entre 1 et 7 et de préférence entre 2 et 4.

**22.** Composition selon la revendication 1, caractérisée en ce qu'elle contient de :

- 0,25 % à 10 % en poids de zéolithe, et
- de 99,75 % à 90 % en poids d'un système intumescent.

**23.** Composition selon la revendication 1, caractérisée en ce qu'elle contient de :

- 1 % à 5 % en poids de zéolithe, et
- de 99 % à 95 % en poids d'un système intumescent.

**24.** Résines synthétiques ignifugées par la composition selon l'une des revendications 1 à 23.

**25.** Résines synthétiques selon la revendication 24, caractérisées en ce que la quantité de la composition est comprise entre 5 % et 60 % en poids par rapport à la résine synthétique ignifugée et de préférence entre 15 % et 35 %.

**26.** Résines synthétiques selon la revendication 24, caractérisées en ce que les résines synthétiques sont choisies parmi les copolymères éthylène/acrylate d'alkyle, les terpolymères éthylène/acrylate d'alkyle/anhydride maléique ; les copolymères éthylène/acétate de vinyle : les copolymères éthylène/alcool vinylique ; les polyméthacrylates de méthyle, les polyamides, les polyuréthanes et les polymères ou copolymères de l'éthylène et du propylène.


**Patentansprüche**

**1.** Halogenfreie flammhemmende Zusammensetzung, dadurch gekennzeichnet, daß sie

A. mindestens ein anschwellendes System, das mindestens einen Gas- oder Schaumbildner (Blähmittel), mindestens ein Carbonisierungsmittel und mindestens ein Dehydrafisierungsmittel enthält, und
B. mindestens einen Zeolithen

urnfaßt.

**2.** Zusammensetzung nach Anspruch 1, dadurch gekennzeichnet, daß der Zeolith ein kristallines Aluminiumsilikat ist, dessen kleinste Elementarzelle durch die folgende Formel (I)

$$M_{x/n} [(AlO_2)_x (SiO_2)_y] w H_2O$$

wiedergegeben wird in der:

- M ein Alkalimetallkation wie Li, Na, K und/oder ein Erdalkalimetallkation wie Ba, Ca, Mg; $NH_4^+$; $H^+$ und/oder ein Tetraalkylammoniumkation darstellt;

- w eine ganze Zahl ist, die die Anzahl an Wassermolekülen pro Elementarzelle darstellt;

- x und y ganze Zahlen sind, die die Tetraedergesamtanzahl pro Elementarzelle darstellen, wobei das y/x-Verhältnis eine Zahl $\geq$ 1 ist;

- n die Wertigkeit des oder der Kationen darstellt.

3. Zusammensetzung nach Anspruch 2, dadurch gekennzeichnet, daß der Zeolith der Formel (I) ausgewählt ist aus:

- Zeolithen vom Typ A der Formel (Ia)

$$M_{x/n} [(AlO_2)_{12}(SiO_2)_{12}] \, 27 \, H_2O$$

in der y/x gleich 1 ist;
- Zeolithen vom Typ X der Formel (Ib)

$$M_{x/n} [(AlO_2)_{86}(SiO_2)_{106}] \, 264 \, H_2O$$

in der y/x gleich 1,23 ist;
- Zeolithen vom Typ Y der Formel (Ic)

$$M_{x/n} [(AlO_2)_{56}(SiO_2)_{136}] \, 250 \, H_2O$$

in der y/x gleich 2,43 ist;
- Zeolithen vom Typ L der Formel (Id)

$$M_{x/n} [(AlO_2)_9(SiO_2)_{27}] \, 22 \, H_2O$$

in der y/x gleich 3 ist;
- Zeolithen vom Typ ZSM der Formel (Ie)

$$M_{x/n} [(AlO_2)_3(SiO_2)_{93}] \, 16 \, H_2O$$

in der y/x gleich 31 ist;
- Zeolithen ZM vom Mordenittyp mit einem geringen Natriumgehalt und einem y/x-Verhältnis von 10 bis etwa 100;
- natürlichen Zeolithen, ausgewählt aus

Cabazit $Ca_2 [(AlO_2)_4(SiO_2)_8] 13 \, H_2O$,
Mordenit $NA_8 [(AlO_2)_8(SiO_2)_{40}] \, 24 \, H_2O$ und
Faujasit $(Ca, Mg, Na_2, K_2)_{29,5} [(AlO_2)_{59}(SiO_2)_{133}] \, 235 \, H_2O$

4. Zusammensetzung nach Anspruch 3, dadurch gekennzeichnet, daß in dem Zeolith der Formel (Ia) $M_{x/n}$

$$K_9Na_3, \, Na_{12} \text{ oder } Ca_{4,5}Na_3$$

darstellt.

5. Zusammensetzung nach Anspruch 3, dadurch gekennzeichnet, daß in den Zeolithen der Formel (Ib) $M_{x/n}$

$$Ca_{21,5}, Na_{43} \text{ oder } Na_{86}$$

darstellt.

6.  Zusammensetzung nach Anspruch 3, dadurch gekennzeichnet, daß in den Zeolithen der Formel (Ic) $M_{x/n}$

$$Na_{56}$$

darstellt.

7.  Zusammensetzung nach Anspruch 3, dadurch gekennzeichnet, daß in den Zeolithen der Formel (Ic) $M_{x/n}$

$$(Na, \text{Tetrapropylammonium})_3$$

darstellt.

8.  Zusammensetzung nach Anspruch 3, dadurch gekennzeichnet, daß in dem Zeolith ZM das y/x-Verhältnis gleich 11 ist.

9.  Zusammensetzung nach Anspruch 3, dadurch gekennzeichnet, daß der natürliche Zeolith Mordenit ist.

10.  Zusammensetzung nach Anspruch 1, dadurch gekennzeiclmet, daß der Zeolith Aluminiumphosphat $AlPO_4$-5 ist.

11.  Zusammensetzung nach Anspruch 1, dadurch gekennzeichnet, daß das Carbonisierungsmittel eine Polyhydroxylverbindung ist.

12.  Zusammensetzung nach Anspruch 11, dadurch gekennzeichnet, daß die Polyhydroxylverbindung Monopentaerythritol ist.

13.  Zusammensetzung nach Anspruch 1, dadurch gekennzeichnet, daß der Schaumbildner eine Stickstoffverbindung ist.

14.  Zusammensetzung nach Anspruch 13, dadurch gekennzeichnet, daß die Stickstoffverbindung ausgewählt ist aus Melaminen, Harnstoff, Guanazol und Piperazin.

15.  Zusammensetzung nach Anspruch 1, dadurch gekennzeichnet, daß das Dehydratisierungsmittel eine phosphorhaltige, säurebildende Verbindung ist.

16.  Zusammensetzung nach Anspruch 15, dadurch gekennzeichnet, daß die säurebildende Verbindung ein Aminsalz oder ein Phosphorsäureester ist.

17.  Zusammensetzung nach Anspruch 16, dadurch gekennzeichnet, daß das Aminsalz ausgewählt ist aus Ammoniumphosphaten, Ammoniumpolyphosphaten und Melaminphosphaten.

18.  Zusammensetzung nach Anspruch 1, dadurch gekennzeichnet, daß der Schaumbildner und das Dehydratisierungsmittel eine einzige Verbindung bilden.

19.  Zusammensetzung nach Anspruch 18, dadurch gekennzeichnet, daß die Verbindung ein Ammoniumsalz ist.

20.  Zusammensetzung nach Anspruch 18 oder 19, dadurch gekennzeichnet, daß die Verbindung ein Ammoniumpolyphosphat der Formel

$$(NH_4)_{n+2}P_nO_{3n+1}$$

ist, in der n eine ganze Zahl ≥ 2 ist.

**21.** Zusammensetzung nach Anspruch 1, dadurch gekennzeichnet, daß das Gewichtsverhältnis

$$\frac{\text{Schaumbildner / Dehydratisierungsmittel}}{\text{Carbonisierungsmittel}}$$

zwischen 1 und 7, vorzugsweise zwischen 2 und 4, liegt.

**22.** Zusammensetzung nach Anspruch 1, dadurch gekennzeichnet, daß sie

- 0,25 Gew.-% bis 10 Gew.-% Zeolith und
- 99,75 Gew.-% bis 90 Gew.-% eines anschwellenden Systems enthält.

**23.** Zusammensetzung nach Anspruch 1, dadurch gekennzeichnet, daß sie

- 1 Gew.-% bis 5 Gew.-% Zeolith und
- 99 Gew.-% bis 95 Gew.-% eines anschwellenden Systems enthält.

**24.** Kunstharze, feuerbeständig gemacht durch eine Zusammensetzung nach einem der Ansprüche 1 bis 23.

**25.** Kunstharze nach Anspruch 24, dadurch gekennzeichnet, daß die Menge der Zusammensetzung zwischen 5 und 60 Gew.-%, vorzugsweise zwischen 15 und 35 Gew.-%, liegt, bezogen auf das Gewicht des feuerbeständigen Kunstharzes.

**26.** Kunstharze nach Anspruch 24, dadurch gekennzeichnet, daß die Kunstharze ausgewählt sind aus Ethylen/Alkylacrylat-Copolymeren, Ethylen/Alkylacrylat/ Maleinsäureanhydrid-Terpolymeren, Ethylen/Vinylacetat-Copolymeren, Ethylen/Vinylalkohol-Copolymeren, Polymethylmethacrylaten, Polyamiden, Polyurethanen und Polymeren oder Copolymeren des Ethylens oder Propylens.

## Claims

**1.** Halogen-free flame-retardant composition characterized in that it includes:

A. at least one intumescent system which contains at least one foam-generator, at least one carbonizing agent and at least one dehydrating agent, and
B. at least one zeolite.

**2.** Composition according to Claim 1, characterized in that the zeolite is a crystalline aluminosilicate in which the smallest unit cell is denoted by the formula:

$$Mx/_n[(AlO_2)_x, (SiO_2)_y]wH_2O \qquad\qquad (I)$$

in which:

- M denotes a cation of an alkali metal such as Li, Na or K and/or a cation of an alkaline-earth metal such as Ba, Ca or Mg, $NH_4^+$, $H^+$ and/or a tetraalkylammonium cation,

- w is an integer which denotes the number of water molecules per unit cell,

- x and y are integers which denote the total number of tetrahedra per unit cell and the ratio y/x is a number ≥ 1,

- n denotes the valency of the cation(s).

**3.** Composition according to claim 2, characterized in that the zeolite of formula (I) in chosen from:

- zeolites of the A type of formula (Ia)

$$M \, x/_n \, [(AlO_2)_{12}(SiO_2)_{12}]27H_2O$$

in which y/x is equal to 1

- zeolites of the X type of formula (Ib)

$$M \, x/_n \, [(AlO_2)_{86}(SiO_2)_{106}]264H_2O$$

in which y/x is equal to 1.23

- zeolites of the Y type of formula (Ic)

$$M \, x/_n \, [(AlO_2)_{56}(SiO_2)_{136}]250H_2O$$

in which y/x is equal to 2.43

- zeolites of the L type of formula (Id)

$$M \, x/_n[(AlO_2)_9(SiO_2)_{27}]22H_2O$$

in which y/x is equal to 3

- zeolites of the ZSM type of formula (Ie)

$$M \, x/_n[(AlO_2)_3(SiO_2)_{93}]16H_2O$$

in which y/x is equal to 31

- zeolites ZM of mordenite type which have a low sodium content and a y/x ratio ranging from 10 to approximately 100,

- natural zeolites such as

    chabazite $Ca_2[(AlO_2)_4(SiO_2)_8].13H_2O$,
    mordenite $Na_8[(AlO_2)_8(SiO_2)_{40}].24H_2O$,

    and faujasite $(Ca,M,Na_2,K_2)_{29.5}[(AlO_2)_{59}(SiO_2)_{133}]235H_2O$.

4. Composition according to Claim 3, characterized in that in the zeolite of formula (Ia) M $x/_n$ denotes:

$$K_9Na_3,$$

$$Na_{12},$$

or

$$Ca_{4.5}Na_3.$$

5. Composition according to Claim 3, characterized in that in the zeolites of formula (Ib) M $x/_n$ denotes: $Ca_{21.5}Na_{43}$ or $Na_{86}$ .

6. Composition according to Claim 3, characterized in that in the zeolites of formula (Ic) M $x/_n$ denotes $Na_{56}$.

7. Composition according to Claim 3, characterized in that in the zeolites of formula (Ic) M $x/_n$ denotes (Na, tetrapropylammonium)$_3$.

8. Composition according to Claim 3, characterised in that in zeolite ZM the ratio y/x is equal to 11.

9. Composition according to Claim 3, characterized in that the natural zeolite is mordenite.

10. Composition according to Claim 1, characterized in that the zeolite is the aluminophoap)ate $AlPO_4$-5.

11. Composition according to Claim 1, characterized in that the carbonizing agent is a polyhydroxylated compound.

12. Composition according to Claim 11, characterized in that the polyhydroxylated compound is mono-gentaerythritol.

13. Composition according to Claim 1, characterized in that the foam-generator in a nitrogen compound.

14. Composition according to Claim 13, characterized in that the nitrogen compound is chosen from melamine, urea, guanazole and piperazine.

15. Composition according to Claim 1, characterized in that the dehydrating agent is a compound which generates acid containing phosphorus.

16. Composition according to Claim 15, characterized in that the compound generating acid is an amine salt or a phosphoric ester.

17. Composition according to Claim 16, characterized in that the amine salt is chosen from ammonium phosphates, ammonium polyphosphates and melamine phosphates.

18. Composition according to Claim 1, characterized in that the foam-generator and the dehydrating agent form a single compound.

19. Composition according to claim 18, characterized in that the compound is an ammonium salt.

20. Composition according to Claim 18 or 19, characterized in that the compound is an ammonium polyphosphate of formula $(NH_4)_{n+2}P_nO_{3n+1}$ in which n is an integer $\geq 2$.

21. Composition according to Claim 1, characterized in that the weight ratio

$$\frac{\text{foam-generator/dehydrating agent}}{\text{carbonizing agent}}$$

is between 1 and 7 and preferably between 2 and 4.

22. Composition according to Claim 1, characterized in that it contains:

- 0.25 % to 10 % by weight of zeolite, and
- from 99.75 % to 90 % by weight of an intumescent systems.

23. Composition according to Claim 1, characterized in that it contains:

- 1 % to 5 % by weight of zeolite, and
- from 99 % to 95 % by weight of an intumescent system.

24. Synthetic resins flame-retarded by the composition according to one of Claims 1 to 23.

**25.** Synthetic resins according to Claim 24, characterized in that the quantity of the composition is between 5 % and 60 % by weight relative to the flame-retarded synthetic resin, and preferably between 15 % and 35 %.

**26.** Synthetic resins according to Claim 24, characterized in that the synthetic resins are chosen from ethylene/alkyl acrylate copolymers, ethylene/alkyl acrylate/maleic anhydride terpolymers, ethylene/vinyl acetate copolymers, ethylene/vinyl alcohol copolymers, polymethyl methacrylates, polyamides, Polyurethanes and ethylene and propylene polymers or copolymers.